# EUROPÄISCHE PATENTSCHRIFT

(11) **EP 2 748 656 B1**
(45) Veröffentlichungstag und Bekanntmachung des Hinweises auf die Patenterteilung: **27.04.2016**
(21) Anmeldenummer: 12756671.9
(22) Anmeldetag: 21.08.2012
(51) Int. Cl.: G02B 6/00, B29C 47/00, B29C 69/02, B29D 11/00, B23K 26/08, B23K 26/364, B23K 26/402

(54) **KONTINUIERLICHES VERFAHREN ZUR HERSTELLUNG VON LICHTLEITERPLATTEN**
CONTINUOUS METHOD FOR MANUFACTURING LIGHT GUIDE PLATES
PROCÉDÉ CONTINU DE FABRICATION DE PLAQUES DE GUIDAGE DE LUMIÈRE

(30) Priorität: 23.08.2011 EP 11178457
(43) Veröffentlichungstag der Anmeldung: 02.07.2014
(73) Patentinhaber: Evonik Röhm GmbH, 64293 Darmstadt (DE)
(72) Erfinder: PISULA, Wojciech, 55118 Mainz (DE); SCHMIDT, Jann, 64331 Weiterstadt (DE); MACHLEID, Gerd, 64625 Bensheim (DE); BAUM, Alexander, 60311 Frankfurt (DE)
(86) Internationale Anmeldenummer: PCT/EP2012/066217
(87) Internationale Veröffentlichungsnummer: WO 2013/026834

(56) Entgegenhaltungen:
- EP-A1- 2 023 039
- EP-A2- 2 180 360
- DE-A1-102004 038 571
- DE-A1-102007 004 247
- JP-A- 2002 192 600
- US-A1- 2008 013 015
- US-A1- 2009 266 804
- US-A1- 2010 085 771
- US-A1- 2010 213 632

## Beschreibung

Die vorliegende Erfindung betrifft ein Verfahren zur kontinuierlichen Herstellung von Lichtleiterplatten, z. B. für den Einsatz als Hintergrundbeleuchtung in LCD Displays.

In Lichtleiterplatten wird zur Hintergrundbeleuchtung von LCD-Displays Licht über die Kante der Lichtleiterplatte eingebracht und über die Plattenoberfläche ausgekoppelt. Um dabei eine besonders homogene bzw. kontrollierte Helligkeitsverteilung auf der Plattenoberfläche zu erreichen, sind lichtbeeinflussende Strukturen auf mindestens einer Seite der Lichtleiterplatte erforderlich. Sehr häufig bestehen diese lichtbeeinflussenden Strukturen aus einem Druckmuster, das auf einer Oberfläche der Lichtleiterplatte aufgedruckt wird. Hierbei wird ein Punkt- oder Linienmuster so aufgedruckt, dass die Dichte in der Plattenmitte hoch ist und nach einer bestimmten Funktion zu den Kanten abfällt. Solche Muster werden typischer Weise im Siebdruckverfahren auf die Plattenoberfläche aufgebracht. Dies ist z.B. im Patent JP4082791A gezeigt.

Nachteilig am o. g. Verfahren ist unter anderem, dass im Siebdruckverfahren jede Platte nur einzeln bedruckt werden kann, was einen relativen hohen manuellen Arbeitsaufwand bedeutet. Es wird jede Platte separat in die Siedruckmaschine gelegt und anschließend nach dem Druck- und Trocknungsvorgang aus der Maschine entnommen und manuell mit einer Schutzfolie versehen. Ein weiterer Nachteil von Druckverfahren, ist die Lichtabsorption der Farbe durch die Partikel und den Binder. Das wirkt sich negativ auf die Effizienz einer Lichtleiterplatte aus.

Eine Alternative zur Strukturerzeugung auf der Oberfläche der Lichtleiterplatte ist die Lasergravur (Laserablation). Hierbei werden einzelne wohl definierte Kavitäten durch einen Laserimpuls in die Plattenoberfläche eingebracht, die eine Licht streuende Wirkung besitzen und so das Licht aus der Platte auskoppeln. Solche Verfahren werden in den Patenten US20090067178 und US20060120110 beschrieben. Um eine homogene Leuchtdichte zu erreichen wird in o. g. Patenten ein entsprechendes Strukturmuster erzeugt.

Ein alternatives Verfahren offenbart die KR2008001775. Hier werden unterschiedlich große Kavitäten durch Lasergravur in die hintere Plattenoberfläche eingearbeitet. Dabei vergrößert sich die Dimension der Lichtstreuer mit dem Abstand zur Lichtquelle. Hierdurch wird eine homogene Leuchtdichte erzielt.

Die US6843587 beschreibt ebenfalls ein Verfahren zur Lasergravur von Lichtleiterplatten. Dabei wird die Platte durch Vakuum an einen Tisch fixiert. Das Muster wird dadurch erzeugt, dass ein Laser bzw. schwenkbarer Spiegel in der x-y horizontalen Ebene die entsprechenden Positionen über dem Lichtleiter anfährt. Dieses Verfahren wurde in Patent KR20060091879A so erweitert, dass zwei Platten gleichzeitig strukturiert werden können. Das Muster wird hierdurch eine Bewegungskombination zwischen den Platten (y-Achse) und dem Laserkopf (x-Achse) erzeugt. Eine weitere Modifikation dieses Verfahrens ist in der KR20050104118A beansprucht, in der eine Bearbeitung von 4 Platten möglich ist, wobei sich diese Platten auf einem rotierenden Tisch befinden und separat unter einen x-y Laser zur Strukturierung positioniert werden. Ein halbkontinuierliches Verfahren wird in Patent US20070251930 dargestellt, welches auf einem rotierenden Tisch beruht, auf dem die einzelnen Lichtleiterplatten gelegt werden. Das Muster wird durch die Rotationsbewegung des Tisches und die dazu senkrechte Bewegung des Laserkopfs erzeugt. Als Nachteil, lassen sich nur kreisförmige Muster auf der Platte herstellen. Eine Geschwindigkeitsverbesserung der Laserstrukturierung kann auch dadurch erreicht werden, dass der Laserstrahl in mehrere Strahlen aufgeteilt wird, die separat auf unterschiedliche Bereiche der Platte treffen. Dieses Verfahren ist in Patent KR2008002354 beschrieben.

US2008013015 offenbart ein Verfahren zur Herstellung von Lichtleiterplatten mit lichtbeeinflussenden Strukturen, wobei zunächst Lichtleiterplatten durch Extrusion erzeugt werden und anschließend mittels einer Lasergravureinrichtung lichtbeeinflussende Strukturen in eine Oberfläche der Lichtleiterplatten graviert werden.

Allen o. g. Verfahren ist gemein, dass sie mit einem hohen manuellen bzw. technischen Aufwand verbunden sind. In allen Fällen müssen die Lichtleiterplatten zunächst erzeugt und anschließend in die Lasergravuranlage eingeführt werden. Nach der Gravur müssen die Platten wieder entnommen werden.

US20090266804 offenbart ein Verfahren zur kontinuierlichen Herstellung von Kunststoffplatten mit Oberflächenstrukturen, wobei eine Kunststoffbahn durch Extrusion erzeugt wird, die Kunststoffbahn kontinuierlich unterhalb einer Lasergravureinrichtung vorbeigeführt wird, mittels der Lasergravureinrichtung Strukturen in eine Oberfläche der Kunststoffbahn graviert werden, und aus der erhaltenen strukturierten Kunststoffbahn einzelne Platten erzeugt werden. Die Herstellung von Lichtleiterplatten wird jedoch nicht offenbart.

Vor dem Hintergrund des stetig wachsenden und unter starkem Preisdruck stehenden Marktes für Backlight Units für LCD-Bildschirme besteht somit nach wie vor ein großer Bedarf an effektiveren und preisgünstigeren Verfahren zur Herstellung entsprechender Lichtleiterplatten.

Aufgabe der vorliegenden Erfindung war es daher, ein neues Verfahren zur Herstellung von Lichtleiterplatten bereitzustellen, welches die Nachteile der Verfahren des Standes der Technik nicht oder nur in verringertem Maße aufweist.

Eine besondere Aufgabe wird darin gesehen ein effektiveres und wirtschaftlicheres Verfahren zur Verfügung zu stellen. Dieses Verfahren soll zudem möglichst flexibel im Hinblick auf die Lichtleitergeometrie und die Dimensionen des Lichtleiters sein.

Weiterhin soll das erfindungsgemäße Verfahren derart ausgestaltet sein, dass Spannungskorrosion in der Lichtleiterplatte und/oder dass die Emission gesundheitsschädlicher Nebenprodukte vermieden werden.

Weitere nicht explizit genante Aufgaben ergeben sich aus dem Gesamtzusammenhang der vorliegenden Beschreibung, Beispiele, Abbildungen und Ansprüche.

Die Erfinder haben nun überraschend gefunden, dass es durch Integration einer Laserstrukturierungseinheit in eine Anlage zur Herstellung von Lichtleiterplatten, an einer Stelle bevor aus einer kontinuierlichen Kunststoffbahn einzelne Lichtleiter geschnitten werden, möglich ist, die gestellten Aufgaben zu lösen. Das erfindungsgemäße Verfahren zeichnet sich dabei dadurch aus, dass die Kunststoffbahn kontinuierlich an der Lasergravureinrichtung vorbeigeführt wird und erst nach der Gravur einzelne Lichtleiterplatten geschnitten werden. Der ganze Prozeß wird somit in-line in einer Maschine durchgeführt. Es entfällt das aufwendige Einlegen der Lichtleiterrohlinge in eine separate Lasergravureinrichtung.

Ferner ermöglicht das erfindungsgemäße Verfahren nur eine oder aber gleichzeitig beide Seiten der Lichtleiterplatten zu gravieren. Dies ist ein weiterer Vorteil gegenüber den Verfahren des Standes der Technik, bei denen durch die "Fördertische" immer nur eine Seite der Lichtleiterplatten graviert werden kann.

Gemäß der vorliegenden Erfindung ist die Lasergravureinheit derart in der Apparatur angeordnet, dass die zu gravierende Kunststoffbahn noch eine entsprechende Restwärme aus der Produktion der Kunststoffbahn aufweist. Die Erfinder haben nämlich überraschend gefunden, dass durch Gravur einer warmen Kunststoffbahn die Spannungskorrosion in der Lichtleiterplatte vermieden werden kann. Im Stand der Technik, z. B. der US 6,843,587 B2 werden zwar auch Verfahren beschrieben, bei der die Lichtleiterplatten vor der Lasergravur erwärmt werden; diese Verfahren haben jedoch den Nachteil, dass eine bereits abgekühlte Platte erneut erwärmt werden muss. Ferner werden die Platten im Stand der Technik nur von einer Seite erwärmt, was einen Temperaturgradienten in der Platte hervorruft. Im erfindungsgemäßen Verfahren ist es erstmals gelungen eine auf beiden Oberflächen gleichmäßig temperierte Kunststoffbahn der Lasergravur zuzuführen und somit die Spannungskorrosion effektiv zu verhindern.

Die nach dem erfindungsgemäßen Verfahren hergestellten Platten weisen den Vorteil auf, dass sie mechanisch über lange Zeit stabil sind.

Gegenstand der vorliegenden Erfindung ist somit ein kontinuierliches Verfahren zur Herstellung von Lichtleiterplatten wie in der nachfolgenden Beschreibung, den Beispielen, Zeichnungen und Ansprüchen definiert.

Gegenstand der vorliegenden Erfindung ist ein Verfahren zur Herstellung von Lichtleiterplatten mit lichtbeeinflussenden Strukturen, wobei
- eine Kunststoffbahn erzeugt wird
- eine Einrichtung zur Glättung der Oberfläche der Kunststoffplattenbahn während der Extrusion verwendet wird
- die Kunststoffbahn kontinuierlich unterhalb und/oder oberhalb mindestens einer Lasergravureinrichtung vorbeigeführt wird
- mittels der Lasergravureinrichtung lichtbeeinflussende Strukturen in mindestens eine Oberfläche der Kunststoffbahn graviert werden und/oder durch Laserinnengravur im Innern der Kunststoffbahn erzeugt werden,
- aus der erhaltenen strukturierten Kunststoffbahn einzelne Lichtleiterplatten erzeugt werden,
wobei die Lasergravureinrichtung in einer kontinuierlichen Extrusionsanlage nach dem Extrusionsglättwerk so angeordnet ist, dass die Lasergravur bei einer Temperatur der, der aktiven Lasergravureinrichtung zugewandten, Oberfläche der Kunststoffbahn von 40 bis 120°C, bevorzugt 40 bis 100°C, besonders bevorzugt 60 bis 100°C erfolgt.

Die vorliegende Erfindung wird nachfolgend im Detail beschrieben.

Die Begriffe Kunststoffbahn, Plattenbahn, Kunststoffplattenbahn und Bahn werden im Rahmen der vorliegenden Erfindung synonym verwendet. Die Begriffe Kunststoffplatten, Lichtleitplatten, Lichtleiterplatten und Platte sowie die Begriffe Kunststoffbahntrennvorrichtung und Trennvorrichtung werden ebenfalls synonym verwendet. Ebenfalls synonym sind die Begriffe Lasergraviereinrichtung und Lasergravureinrichtung.

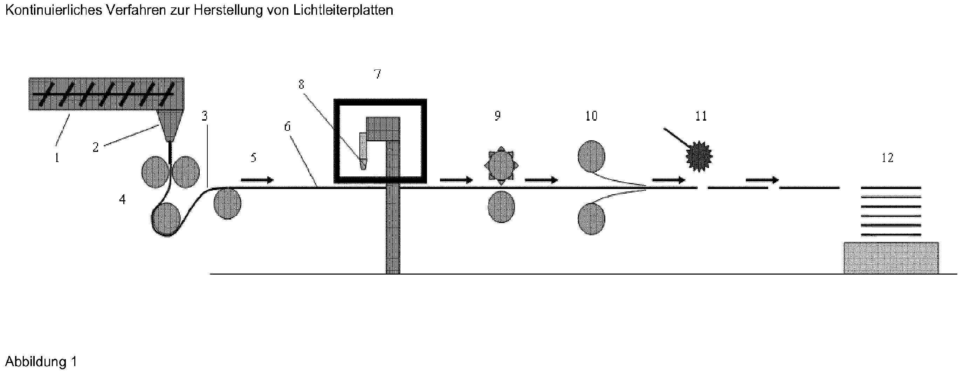

Das Verfahren der vorliegenden Erfindung zeichnet sich dadurch aus, dass eine Lasergravureinrichtung in eine kontinuierliche Lichtleiterplattenproduktionsanlage, bevorzugt eine Kunststoffplattenextrusionslinie, integriert wird. Besonders bevorzugt wird die Lasergravureinrichtung dabei zwischen dem sogenannten Glättwerk und der Trennvorrichtung der Kunststoffextrusionslinie entweder oberhalb und/oder unterhalb der erkaltenden Kunststoffbahn angebracht (siehe Abbildung 1 für ein Beispiel mit oberhalb der Kunststoffbahn angebrachter Lasergravureinrichtung).

Durch die Integration der Lasergravureinrichtung in die kontinuierliche Kunststoffplattenextrusionslinie können Muster von lichtbeeinflussenden Kavitäten bereits während der Produktion der Kunststoffplatten in der Vorschubbewegung der Plattenbahn in mindestens einer oder gleichzeitig in beide Oberflächen der erkaltenden Kunststoffplattenbahn eingebracht werden. Nach vollständigem Erkalten der Kunststoffbahn können die Lichtleiterplatten, die das Muster aus lichtbeeinflussenden Kavitäten tragen, aus der Kunststoffbahn ausgeschnitten werden.

Die Erfinder haben herausgefunden, dass es zur Sicherstellung einer ausreichenden inneren Totalreflektion wichtig ist, dass die Lichtleiter möglichst planare Oberflächen aufweisen. Um dies zu gewährleisten umfassen die erfindungsgemäßen Anlagen ein Glättwerk bzw. wird im erfindungsgemäßen Verfahren ein Glättwerk verwendet. Dies führt dazu, dass Lichtleitplatten mit niedriger Oberflächenrauigkeit auf beiden Seiten erhalten werden.

Die Erfinder haben herausgefunden, dass besonders vorteilhafte Lichtleiter erhalten werden, wenn die Oberflächenrauigkeit des Lichtleiters, gemessen nach DIN EN ISO 4287 unter 1 mm, besonders bevorzugt unter 500 nm, ganz besonders bevorzugt unter 400, speziell bevorzugt unter 350 nm, ganz speziell bevorzugt unter 300 nm und insbesondere bevorzugt unter 250 nm liegt. Die Auswahl entsprechender Glättwerke sowie deren Betrieb zur Erreichung entsprechender Oberflächenrauhigkeiten sind von einem Fachmann unter Anwendung seines allgemeinen Fachwissens möglich.

Für das bevorzugte Lichtleitermaterial Poly(methyl)methacrylat-basierte Kunststoffe können 2, 3, 4 oder noch mehr walzige Glättwerke verwendet werden. Die Temperaturen der Walzen werden dabei bevorzugt in einem Bereich von 70 bis 130°C, besonders bevorzugt 80 bis 120 °C und ganz besonders bevorzugt 85 bis 115°C gewählt. Bevorzugt werden alle Walzen in diesem Temperaturbereich betrieben. Es können aber auch einzelne oder mehrere Walzen in anderen Temperaturbereichen betrieben werden.

Die Geschwindigkeit der Walzen kann bevorzugt im Bereich von 0,5 bis 5 m/min gewählt werden.

Durch den Abstand der Lasergravureinrichtung vom Glättwerk und/oder die Vorschubgeschwindigkeit der Bahn kann dabei die Temperatur der Kunststoffplattenbahn, bei der die Lasergravur erfolgt, gesteuert werden. Bei höherer Temperatur sind bei gleicher Laserleistung größere Kavitäten, die eine größere Lichtbeeinflussung bewirken, gravierbar. Zur Gravur von gleichgroßen Kavitäten reicht bei höherer Temperatur eine kleinere Laserleistung. In einer bevorzugten Ausführungsform des erfindungsgemäßen Verfahrens wird der Abstand zwischen dem Glättwerk und der Lasereinheit und/oder die Vorschubgeschwindigkeit daher so gewählt, dass die Plattenbahn auf die entsprechende Temperatur, bei der die Laserstrukturierung stattfinden soll, abgekühlt ist. Dabei werden Temperatur der Bahn und die Laserleistung so angepasst, dass Kavitäten mit gewünschter Geometrie (zum Beispiel Tiefe) entstehen.

In einer besonders bevorzugten Ausführungsform wird die Geometrie der Kavitäten durch die Vorschubrichtung der Plattenbahn in x-Richtung und die Bewegung der Laserköpfe in y-Richtung, d.h. die Richtung quer zur Vorschubrichtung der Plattenbahn, bestimmt. Dabei ist die Extrusionsrate bzw. die Vorschubsgeschwindigkeit mit der Lasergeschwindigkeit gekoppelt.

Da das Muster der Kavitäten sowie die genaue Geometrie und Anordnung jeder einzelnen Kavität unter anderem von den Dimensionen der Lichtleiterplatte (Dicke, Höhe) und vom verwendeten Kunststoff der Lichtleiterplatte abhängt, muss die genaue Betriebsweise der erfindungsgemäßen Anlage bzw. des erfindungsgemäßen Verfahrens jeweils individuell festgelegt und die Parameter Laserleistung, Abstand zwischen Laserkopf und/oder des schwingbaren Spiegels von der diesem zugewandten Oberfläche der Kunststoffbahn, Dicke der Kunststoffbahn, Temperatur der Kunststoffbahn, Position der Lasergravureinheit und Extrusionsrate bzw. die Plattenvorschubsgeschwindigkeit jeweils individuell angepasst werden. Die erfindungsgemäß verwendete Anlage ist entsprechend ausgestaltet um eine individuelle Regelung der genannten Parameter gewährleisten zu können. Ferner ist sie mit entsprechenden computergesteuerten Regelungs-, Steuerungs- und Überwachungseinheiten versehen.

In einer bevorzugten Ausführungsform kann die Vorschubgeschwindigkeit der zu gravierenden Kunststoffbahn zwischen 0,5 und 10 m/min, besonders bevorzugt zwischen 1 und 6 m/min, ganz besonders bevorzugt zwischen 2 und 4 m/min, variiert werden.

Die Kavitäten in der Oberfläche der Lichtleiterplatte weisen bevorzugt einen Tiefenbereich zwischen 40 - 1000µm, besonders bevorzugt 60 und 500 µm, ganz besonders bevorzugt 100 und 300 µm und einen Halbwertsdurchmesser (Definition: Durchmesser, bei dem die Kavitätstiefe die Hälfte des maximalen Zentrumswerts beträgt) zwischen 50 - 500µm, besonders bevorzugt 60 und 250 µm, ganz besonders bevorzugt 80 und 150 µm auf.

Als Laser werden bevorzugt CO2, Excimer, HeNe-Laser, N2-Laser und andere verwendet. Die Laserleistung pro Endstrahl, der auf die Plattenoberfläche trifft, beträgt zwischen 2W und 400W, bevorzugt 5W und 150W.

Die Temperatur der, der aktiven Lasergravureinrichtung zugewandten, Oberfläche der Kunststoffbahn liegt bevorzugt im Bereich von 25 bis 120°C, besonders bevorzugt von 40 bis 100°C und ganz besonders bevorzugt bei 60 bis 100°C. Sie kann jedoch abhängig vom verwendeten Polymer angepasst werden.

Die Erfinder haben herausgefunden, dass sich eine höhere Temperatur der Kunststoffplattenbahn positiv auf die Spannungskorrosion auswirkt. Ohne an eine bestimmte Theorie gebunden zu sein, sind die Erfinder der Ansicht, dass bei der Lasergravur von Kunststoffen Kunststoffmoleküle aufgebrochen und verdampft werden, um so eine Kavität zu erzeugen. Die dabei entstehenden Gase können in den verbleibenden Kunststoff eindiffundieren und besonders bei PMMA, einem bevorzugt für Lichtleiterplatten eingesetzten Kunststoff, Spannungskorrosion erzeugen. Dies kann zu Spannungsrissen führen. Durch die Lasergravur bei erhöhter Temperatur der Kunststoffplattenbahn können die Spannungen gemindert und somit Spannungsrisse in der Platte vermieden werden. In einer besonders bevorzugten Ausführungsform beträgt daher die Temperatur der der aktiven Lasergravureinheit zugewandten Oberfläche der Kunststoffbahn bei einem auf Polymethylmethacrylat (PMMA) basierenden Kunststoff 40 bis 120 °C, ganz besonders bevorzugt 60 bis 100°C. Unter aktiver Lasergravureinrichtung wird dabei die Lasergravureinrichtung verstanden, deren Laser beim passieren der Kunststoffbahn aktiviert ist. Obwohl die Apparatur derart ausgestaltet sein kann, dass beide Oberflächen der Kunststoffbahn graviert werden können, kann es sein, dass die Anlage derart betrieben wird, dass nur eine Seite graviert wird. Der auf dieser Seite befindliche Laser wird dann als "aktiv" und der auf der anderen Seite befindliche Laser als "passiv" bezeichnet. Wird eine solche Anlage nur mit einem Laser betrieben, die Strahlen jedoch optisch entsprechend aufgeteilt, wird dadurch die "laseraktive" und "laserpassive" Seite definiert.

Die Lasergravureinrichtung ist rechnergesteuert, so dass sehr flexibel während des laufenden Extrusionsbetriebs von einem Muster aus lichtbeeinflussenden Kavitäten auf ein anders Muster umgestellt werden kann. Dazu kann die Lasergravureinrichtung bevorzugt Quer- (Y-Richtung) und/oder parallel (X-Richtung) und/oder im Abstand zur Oberfläche der Kunststoffbahn (Z-Richtung) bewegt werden. Es kann entweder die ganze Apparatur oder aber nur einige Teile, wie z. B. die Köpfe oder Spiegel bewegt werden. Dadurch wird eine hohe Flexibilität und Vielseitigkeit gewährleistet.

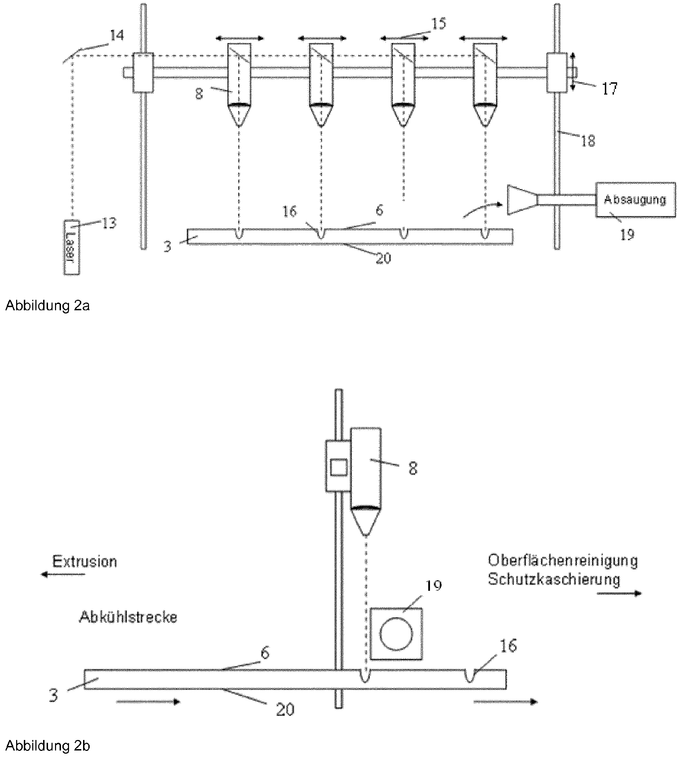

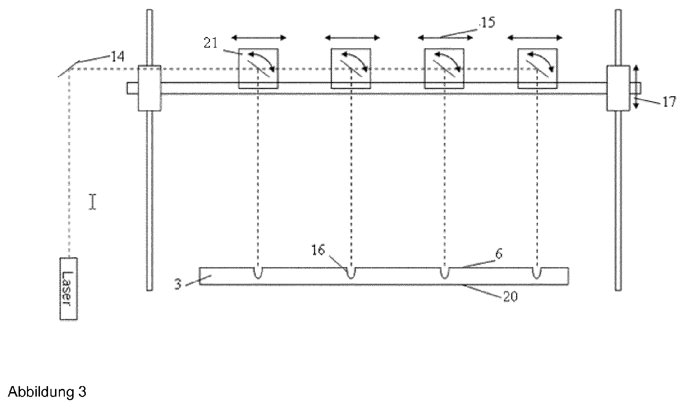

Beim erfindungsgemäßen Verfahren wird der Laserstrahl bevorzugt von einem oder mehreren Lasern erzeugt. In einer besonders bevorzugten Ausführungsform wird/werden der Strahl oder die Strahlen in weitere Strahlen aufgeteilt, die separat zur Strukturierung ausgenutzt werden können, und somit die Bearbeitungsgeschwindigkeit erhöhen. Die Strahlführung und -spaltung kann dabei durch entsprechende optische Elemente, wie z.B. halbtransparente Spiegel, geregelt werden. Alle generierten Strahlen treffen schließlich auf unterschiedliche Stellen der Plattenoberfläche und erzeugen dort Kavitäten mit einer definierten Geometrie. Im letzten Abschnitt des Strahlverlaufs wird/werden erfindungsgemäß bevorzugt ein oder mehrere Laserkopf/Laserköpfe mit einer Linse (siehe zum Beispiel Abbildung 2a und 2b) und/oder ein oder mehrere, bevorzugt schwingbare, Spiegel, insbesondere ein Galvokopf (siehe zum Beispiel Abbildung 3) verwendet, um den jeweiligen Laserstrahl zu fokussieren. Der Kopf oder die Köpfe ist/sind über der Plattenbahn der kontinuierlichen Extrusionsanlage befestigt. Der Abstand zwischen Laserkopf und Plattenoberfläche (Z-Richtung) ist bevorzugt verstellbar. Des Weiteren können die Köpfe Quer- (Y-Richtung) und/oder parallel (X-Richtung), besonders bevorzugt quer zur Plattenvorschubsrichtung, bewegt werden, um einen größeren Plattenbereich abrastern zu können. In diesen besonders bevorzugten Ausführungsformen gelingt es die Herausforderungen, Strukturen auf einer bewegten Platte aufzubringen und gleichzeitig zu gewährleisten, dass das vorher errechnete Strukturenmuster reproduzierbar und mit hoher Qualität auf der Plattenoberfläche wiedergegeben wird und nicht durch die Plattenbewegung verändert wird, zu lösen. Dabei erlaubt es das erfindungsgemäße Verfahren das Strukturmuster in einer einfachen und preiswerten Weise zu verändern, und so an die entsprechende Lichtleiterplattengeometrie und Strukturgröße anzupassen. Des Weiteren kann die Strukturierungsgeschwindigkeit an die Vorschubgeschwindigkeit der Plattenextrusionsanlage angepasst, und somit eine Ausstosslimitierung der Plattenextrusionsanlage durch den Strukturierungsprozess vermieden werden. Das erfindungsgemäße Verfahren erlaubt somit eine kontinuierliche und kostengünstige Herstellung von Lichtleiterplatten.

Die im erfindungsgemäßen Verfahren verwendete Anlage umfasst bevorzugt eine Einrichtung zur Entfernung der bei der Lasergravur entstehenden Gase, besonders bevorzugt eine Absaugvorrichtung. Entsprechende technische Lösungen sind dem Fachmann bekannt. Es gibt diesbezüglich keine speziellen Restriktionen. Mit dem erfindungsgemäßen Verfahren bzw. der erfindungsgemäßen Anlage gelingt es somit gesundheitsschädliche Nebenprodukte auf einfache Weise zu eliminieren ohne aufwendige und teuere Schutzmassnahmen zu verwenden. Handelt es sich bei dem Kunststoff um einen Kunststoff auf Basis von PMMA, so handelt es sich beim entstehenden Gas hauptsächlich um MMA, welches in einer speziellen Variante des erfindungsgemäßen Verfahren aufgefangen und zur Herstellung von PMMA wiederverwendet wird.

Nach der Lasergravur wird in weiteren Prozessschritten des erfindungsgemäßen Verfahrens in kontinuierlicher Weise die Platte gegebenenfalls gereinigt, schutzkaschiert und anschließend zugeschnitten.

Die im erfindungsgemäßen Verfahren verwendete Kunststoffbahn umfasst bevorzugt mindestens einen oder mehrere transparente(n), thermoplastische(n) Kunststoff(e), besonders bevorzugt handelt es sich um einen PMMA, Polycarbonat, Polystyrol, Cyclo-Olefin-Copolymere, PET, PMMI (Polymethyl methacrylimid), Polysulfon enthaltenden Kunststoff. Ganz besonders bevorzugt handelt es sich um einen PMMA enthaltenden Kunststoff.

In einer speziellen Ausführungsform umfasst die Kunststoffbahn zudem Streupartikel, bevorzugt TiO2, BaSO4, Polystyrol- oder Polysilsesquioxan-basierte Systeme.

Die Dicke der erfindungsgemäß verwendeten Kunststoffbahn liegt bevorzugt im Bereich von 0,5 bis 25 mm, besonders bevorzugt von 1 bis 20 mm und ganz besonders bevorzugt von 2 bis 10 mm.

Die nachfolgenden Beispiele dienen zur näheren Erläuterung und zum besseren Verständnis der vorliegenden Erfindung, schränken diese aber in keiner Weise ein.

### Beispiele

### Beispiel 1:

Als Beispiel 1 wird in den Abbildungen 1, 2a und 2b eine Apparatur mit einer Lasergravureinrichtung mit Laserköpfen gezeigt.

In Abbildung 1 wird eine bevorzugte Ausführungsform der Anlage gezeigt. Aus einer transparenten Formmasse wird mittels eines Einschneckenextruders (1) und einer Düse (2) eine Kunststoffbahn (3) extrudiert und über das Glättwerk (4) geleitet. Die Abkühlstrecke (5) wird derart ausgestaltet, dass die zu strukturierende, der aktiven Lasergravureinrichtung (7) zugewandte Oberfläche (6) der Kunststoffbahn (3) unterhalb des Laserkopfs (8) die gewünschte Temperatur aufweist. Nach der Gravur der Kunststoffbahn (3) wird deren Oberfläche in der Einheit (9) gereinigt, eine Schutzkaschierung aufgezogen (10), die Platten zurecht geschnitten (11) und palettiert (12).

Ein Vergleich zweier Kavitäten, welche bei gleicher Laserleistung jedoch unterschiedlicher Temperatur der Kunststoffbahn eingraviert wurden, zeigte, dass eine Erhöhung der Temperatur der Kunststoffbahn um 70°C zu einer um 12% tieferen Kavität führte.

In Abbildung 2a , 2b und 3 wird jeweils ein vergrößerter Ausschnitt des Bereichs der Apparatur gezeigt, an dem sich die Lasergravureinrichtung (7) befindet.

In Abbildung 2a umfasst die Lasergravureinrichtung (7) einen Laser (13), einen Umlenkspiegel (14) sowie mehrere Laserköpfe (8), welche sowohl in Y-Richtung (15), d.h. quer zur Vorschubrichtung der Plattenbahn, als auch in Z-Richtung (17) (Abstand des Laserkopfs zur Oberfläche der Plattenbahn) zur Bewegungsrichtung der Kunststoffbahn (X-Richtung) bewegt werden können. Die Laserköpfe (8) sind an der Haltevorrichtung (18) beweglich befestigt. Mit Hilfe des auf die verschiedenen Laserköpfe aufgeteilten Laserstrahls werden gleichzeitig mehrere Kavitäten (16) in die der Lasergravureinrichtung (7) zugewandte Oberfläche (6) eingraviert. Die der Lasergravureinrichtung (7) abgewandte Oberfläche (20) wird in diesem Beispiel nicht strukturiert. Zur Entfernung der bei der Gravur entstehenden Gase umfasst die Apparatur eine Absaugung (19).

Abbildung 2b stellt eine um 90° gedrehte Ansicht der Abbildung 2a dar.

### Beispiel 2

Als Beispiel 2 wird in den Abbildungen 1 und 3 eine Apparatur mit einer Lasergravureinrichtung mit Galvoköpfen gezeigt.

Abbildung 3 unterscheidet sich von Abbildung 2a dadurch, dass anstelle von Laserköpen (8) Galvoköpfe (21) verwendet werden. Auch diese können entsprechend in Y-Richtung (15) und Z-Richtung (17) bewegt werden.

### Beispiel 3

In Beispiel 3 wird der Effekt der Temperaturvariation der Kunststoffbahn auf die Kavitäten gezeigt.

Zur Laserstrukturierung wurde dabei ein Eurolaser M1200 Tisch verwendet, ausgestattet mit einem x-y fahrbaren Gravuroptikkopf. Der Abstand zwischen Kopf und der diesem zugewandten Plattenoberfläche wurde manuell eingestellt, so dass ein Abstand von 60 mm zwischen der 2.5"-Linse und Plattenoberfläche entstanden ist. Die x-y Laserkopfposition über der Platte wurde computergesteuert. Die Laserstrukturen wurden auf der Platte eingraviert.

Ausgewählt für die Lasergravur wurden kontinuierlich extrudierte Platten der Acryl-Formasse PLEXIGLAS^{®} POQ66, die eine besonders hohe optische Reinheit aufweist. Es wurden Platten bei Temperaturen von 20°C und 90°C laserstrukturiert, bei einer Laserleistung von 100W. Die entstandenen Kavitäten in der Plattenoberfläche wurden mittels Rasterelektronenmikroskop (REM) von Schnittbildern ermittelt. Aus den REM Bildern ist zu erkennen, dass tiefere Kavitäten bei höherer Arbeitstemperatur entstehen. Der Tiefenunterschied zwischen beiden Temperaturen betrug ca. 90µm, was ca. 12% entspricht.

Zum Test der Spannungsrissbeständigkeit wurden die Platten in Ethylester eingetaucht. Die bei 20°C laserstrukturierten Platten zeigten bereits nach 30 sek. Eintauchzeit mehrere deutlich sichtbare Risse. Die bei 90°C laserstrukturierten Platten zeigten selbst nach 8 min Eintauchzeit keine Risse. Dies zeigt, dass die in line Laserstrukturierung bei erhöhter Temperatur sowohl zu einer verbesserten Spannungsriss- als auch Chemikalienbeständigkeit führt.

### Beispiel 4

In Beispiel 4 wird die kontinuierliche Laserstrukturierung eines PMMA basierten Lichtleiters gezeigt.

Für dieses Beispiel wurde der Eurolaser M1200 Laser mit den gleichen Parametern verwendet wie in Beispiel 3. Für Bewegung des Laserkopfs wurde die Bewegung auf die y-Achse eingeschränkt, wobei die Strukturierung nur in einer Richtung ("hin"-Bewegung) erfolgt ist. Eine Lichtleiterplatte mit einer Breite von 250 mm wurde unterhalb des sich bewegenden Laserkopfs entlang der x-Achse mit einer Geschwindigkeit von 0,32m/min gefahren. Die Geschwindigkeit des Lasers betrug 1 m/sec. Somit sind auf der Plattenoberfläche Linienabstände von 5 mm entstanden. Hierbei ist der Hin- und Rückweg des Laserkopfs inklusive einer Ruhepause von 0,5 s zu berücksichtigen. Die Lichtauskopplung der resultierenden Lichtleiterplatte wurde mittels einer Leuchtdichte CCD Kamera ermittelt. Hierbei wurde das Licht über die beiden kurzen Seiten mit Hilfe von LEDs eingekoppelt. Das erhaltene Leuchtdichtebild zeigte die Helligkeitsverteilung für den laserstrukturierten Lichtleiter. Jedem Grauton ist dabei eine bestimmte Leuchtdichte zugeordnet, wobei hellere Töne höhere Leuchtdichtewerte bedeuten. Im vorliegenden Fall wurde gefunden, dass die Helligkeitsverteilung über die Platte relativ homogen ist, d.h. es wird entsprechend viel Licht auch aus der Plattenmitte ausgekoppelt. Dies zeigt, dass die kontinuierliche Produktion der Lichtleiterplatte erfolgreich durchgeführt wurde und das Muster hinreichend präzise erzeugt werden konnte.

### Beispiel 5

Es wird der Einfluss des Glättwerks auf die Oberflächenrauhigkeit von extrudierten PMMA basierten Lichtleitern gezeigt.

Für dieses Beispiel wurden Lichtleitplatten mit und ohne Glättwerk extrudiert und die Oberflächenrauhigkeit bestimmt. Hierzu wurde ein 4-Walzen Glättwerk verwendet.

Die Prozessparameter der Walzen des Glättwerks für die Plattendicke von 1,5 bis 6 mm sind die folgenden:
Temperatur:
   Walze 1: 85 bis 92 °C
   Walze 2: 94 bis 100 °C
   Walze 3: 102 bis 112°C
   Walze 4: 105 bis 113 °C
Geschwindigkeit:
   Leitgeschwindigkeit Walze 2: 1,0 bis 3,6 m/min
   Die Geschwindigkeiten der Walzen 1, 3 und 4 werden zur Leitgeschwindigkeit der Walze 2 bis zu 1,5 % langsamer gefahren.

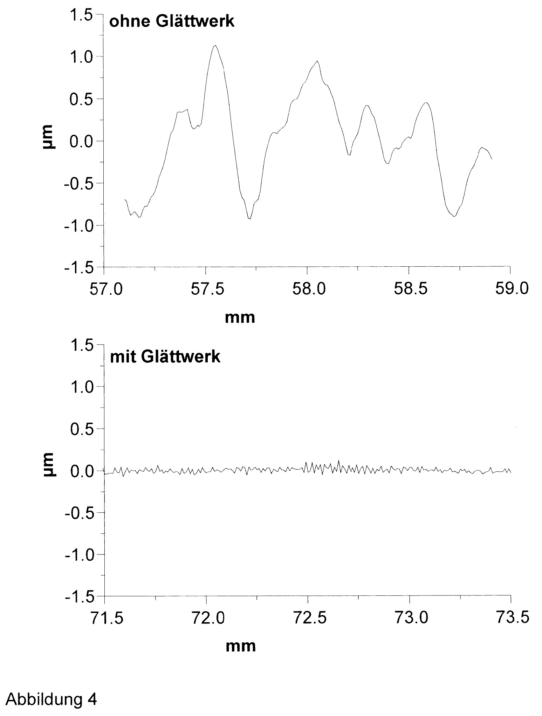

Die Primärprofilkenngröße der Oberflächenrauhigkeit wurde nach DIN EN ISO 4287 bestimmt. Die ermittelten Oberflächenprofile sind in Abbildung 4 zu sehen. Die Lichtleitplatte extrudiert ohne Glättwerk weist eine deutlich höhere Oberflächenrauhigkeit auf, als die Platte mit Glättwerk. Die Gesamthöhe des Profils Pt beträgt für die Platte ohne Glättwerk 2,07 µm und mit Glättwerk 0,24 µm.

Die Lichtleiterplatten wurden erfindungsgemäß graviert. Anwendungstechnische Prüfungen ergaben, dass die erfindungsgemäßen Lichtleiterplatten hervorragende Lichtauskopplungseigenschaften aufwiesen, wogegen die Platten ohne Glättung keine ausreichende Performance zeigten.

### Bezugszeichenliste:

- 1:: Einschneckenextruder
- 2:: Düse
- 3:: Kunststoffbahn
- 4:: Glättwerk
- 5:: Abkühlstrecke
- 6:: Der aktiven Lasergravureinheit zugewandte Oberfläche der Kunststoffbahn (3)
- 7:: Lasergravureinrichtung
- 8:: Laserkopf
- 9:: Reinigungseinheit
- 10:: Einheit zum Aufbringen der Schutzkaschierung
- 11:: Plattentrennvorrichtung
- 12:: Palettierung
- 13:: Laser
- 14:: Umlenkspiegel
- 15:: Y-Richtung
- 16:: Kavität
- 17:: Z-Richtung
- 18:: Haltevorrichtung
- 19:: Absaugung
- 20:: Der aktiven Lasergravureinheit abgewandte Oberfläche der Kunststoffbahn (3)
- 21:: Galvoköpfe

## Patentansprüche

1. Verfahren zur Herstellung von Lichtleiterplatten mit lichtbeeinflussenden Strukturen, wobei
- eine Kunststoffbahn durch Extrusion erzeugt wird
- eine Einrichtung zur Glättung der Oberfläche der Kunststoffplattenbahn während der Extrusion verwendet wird
- die Kunststoffbahn, kontinuierlich unterhalb und/oder oberhalb mindestens einer Lasergravureinrichtung vorbeigeführt wird
- mittels der Lasergravureinrichtung lichtbeeinflussende Strukturen in mindestens eine Oberfläche der Kunststoffbahn graviert werden und/oder durch Laserinnengravur im Innern der Kunststoffbahn erzeugt werden,
- aus der erhaltenen strukturierten Kunststoffbahn einzelne Lichtleiterplatten erzeugt werden,
wobei die Lasergravureinrichtung in einer kontinuierlichen Extrusionsanlage nach dem Extrusionsglättweric so angeordnet ist, dass die Lasergravur bei einer Temperatur der, der aktiven Lasergravureinrichtung zugewandten, Oberfläche der Kunststoffbahn von 40 bis 120°C, bevorzugt 40 bis 100°C, besonders bevorzugt 60 bis 100°C erfolgt.

2. Verfahren nach Anspruch 1,
**dadurch gekennzeichnet, dass**
die Lasergravureinrichtung in eine kontinuierliche Extrusionsanlage zwischen dem Extrusionsglättwerk und der Kunststoffbahntrennvorrichtung integriert ist und/oder
dass die Vorschubgeschwindigkeit der zu gravierenden Kunststoffbahn zwischen 0,5 und 10 m/min, bevorzugt zwischen 1 und 6 m/min und besonders bevorzugt zwischen 2 und 4 m/min beträgt.

3. Verfahren nach einem der Ansprüche 1 oder 2,
**dadurch gekennzeichnet, dass**
ein Laserstrahl bzw. mehrere Laserstrahlen von einem oder mehreren Lasern erzeugt wird/werden
und/oder
der Laserstrahl oder die Laserstrahlen in weitere Strahlen aufgeteilt werden, die separat zur Strukturierung ausgenutzt werden können, und/oder
der Laserstrahl oder die Laserstrahlen durch mindestens einen Laserkopf mit einer Linse und/oder mindestens einen schwingbaren Spiegel, insbesondere einen Galvokopf, geleitet werden.

4. Verfahren nach Anspruch 3,
**dadurch gekennzeichnet, dass**
die Lasergravureinrichtung und/oder der Laserkopf bzw. ein oder mehreren Laserköpfe und/oder ein oder mehrere, bevorzugt schwingbare, Spiegel parallel und/oder quer zur Vorschubsrichtung der Kunststoffbahn bewegt werden können und/oder ihr Abstand zur Oberfläche der Kunststoffbahn variiert werden kann.

5. Verfahren nach einem der vorhergehenden Ansprüche,
**dadurch gekennzeichnet,**
**dass** durch Anpassung der Temperatur der, der aktiven Lasergravureinrichtung zugewandten, Oberfläche der Kunststoffbahn und/oder der Laserleistung, die Geometrie der Kavitäten bestimmt wird
und/oder
**dass** die Geometrie der Kavitäten durch Justierung des Abstands zwischen Laserkopf und/oder des, bevorzugt schwingbaren, Spiegels und der diesem zugewandten Oberfläche der Kunststoffbahn gesteuert wird.

6. Verfahren nach einem der vorherigen Ansprüche,
**dadurch gekennzeichnet, dass**
die Kunststoffbahn mindestens einen oder mehrere transparente(n), thermoplastische(n) Kunststoff(e), bevorzugt einen PMMA oder Polycarbonat enthaltenden Kunststoff, umfasst
und/oder
dass die Kunststoffbahn mindestens einen oder mehrere transparente(n), thermaplastische(n) Kunststoff(e) umfasst, welche(r) Streupartikel, bevorzugt TiO2, BaSO4, Polystyrol- oder Polysilsesquioxan-basierte Systeme umfasst bzw. umfassen und/oder
dass die Kunststoffbahn eine Dicke im Bereich von 0,5 bis 25 mm, bevorzugt von 1 bis 20 mm und besonders bevorzuat von 2 bis 10 mm aufweist.

7. Verfahren nach einem der vorherigen Ansprüche,
**dadurch gekennzeichnet, dass**
als Laser ein CO2-, Excimer-, HeNe-oder N2-Laser verwendet wird und/oder
die Laserleistung pro Strahl im Bereich zwischen 2W und 400W, bevorzugt 5W und 150W geregelt wird.

8. Verfahren nach einem der vorherigen Ansprüche,
**dadurch gekennzeichnet, dass**
auf beiden Seiten der Kunststoffbahn eine Oberflächengravur erfolgt.

## Claims

1. Method for producing light guide plates having light-influencing structures, wherein
- a plastic web is produced by extrusion,
- a device for smoothing the surface of the plastic plate web is used during extrusion,
- the plastic web is led past continuously below and/or above at least one laser engraving device,
- by means of the laser engraving device, light-influencing structures are engraved into at least one surface of the plastic web and/or are produced by laser internal engraving in the interior of the plastic web,
- individual light guide plates are produced from the structured plastic web obtained, wherein the laser engraving device is arranged in a continuous extrusion apparatus downstream of the extrusion polishing stack such that the laser engraving is effected at a temperature of the surface, facing the active laser engraving device, of the plastic web of 40 to 120°C, preferably 40 to 100°C, particularly preferably 60 to 100°C.

2. Method according to Claim 1,
**characterized in that**
the laser engraving device is integrated into a continuous extrusion apparatus between the extrusion polishing stack and the plastic web separating device,
and/or
**in that** the feed rate of the plastic web to be engraved is between 0.5 and 10 m/min, preferably between 1 and 6 m/min and particularly preferably between 2 and 4 m/min.

3. Method according to either of Claims 1 and 2,
**characterized in that**
one laser beam or a plurality of laser beams is/are generated by one or a plurality of lasers,
and/or
the laser beam or the laser beams is/are split into further beams that can be used separately for structuring,
and/or
the laser beam or the laser beams is/are guided by at least one laser head having a lens and/or at least one oscillatory mirror, in particular a galvo head.

4. Method according to Claim 3,
**characterized in that**
the laser engraving device and/or the laser head or one or a plurality of laser heads and/or one or a plurality of, preferably oscillatory, mirrors can be moved parallel and/or transversely with respect to the feed direction of the plastic web and/or their distance from the surface of the plastic web can be varied.

5. Method according to any of the preceding claims,
**characterized in that**
by adapting the temperature of the surface, facing the active laser engraving device, of the plastic web and/or the laser power, the geometry of the cavities is determined,
and/or
**in that** the geometry of the cavities is controlled by adjusting the distance between the laser head and/or the, preferably oscillatory, mirror and the surface, facing the latter, of the plastic web.

6. Method according to any of the preceding claims,
**characterized in that**
the plastic web comprises at least one or a plurality of transparent thermoplastic plastic(s), preferably a plastic containing PMMA or polycarbonate,
and/or
**in that** the plastic web comprises at least one or a plurality of transparent thermoplastic plastic(s) comprising scattering particles, preferably TiO2, BaSO4, polystyrene- or polysilsesquioxane-based systems,
and/or
**in that** the plastic web has a thickness in the range of 0.5 to 25 mm, preferably of 1 to 20 mm and particularly preferably of 2 to 10 mm.

7. Method according to any of the preceding claims,
**characterized in that**
the laser used is preferably a CO2, excimer, HeNe or N2 laser,
and/or
the laser power per beam is controlled in the range between 2W and 400W, preferably 5W and 150W.

8. Method according to any of the preceding claims,
**characterized in that**
surface engraving is effected on both sides of the plastic web.

## Revendications

1. Procédé pour la fabrication de plaquettes de guide d'ondes optiques avec des structures influençant la lumière,
dans lequel
- une bande de matière plastique est produite par extrusion,
- un dispositif étant utilisé pour le lissage de la surface de la bande de plaquettes de matière plastique pendant l'extrusion,
- la bande de matière plastique passant en continu au-dessous et/ou au-dessus d'au moins un dispositif de gravure laser,
- grâce au dispositif de gravure laser, des structures influençant la lumière étant gravées dans au moins une surface de la bande de matière plastique et/ou étant produites par gravure intérieure au laser à l'intérieur de la bande de matière plastique,
- des plaquettes de guide d'ondes optiques individuelles étant produites à partir de la bande de matière plastique structurée obtenue,
dans lequel le dispositif de gravure laser est disposé dans une installation d'extrusion continue après le dispositif de lissage d'extrusion de telle sorte que la gravure laser s'effectue à une température de la surface de la bande de matière plastique tournée vers le dispositif de gravure laser de 40 à 120 °C, de préférence de 40 à 100 °C, de manière particulièrement préférée, de 60 à 100°C.

2. Procédé selon la revendication 1,
**caractérisé en ce que**
le dispositif de gravure laser est intégré dans une installation d'extrusion continue entre le dispositif de lissage d'extrusion et le dispositif de séparation de bande de matière plastique,
et/ou
**en ce que** la vitesse d'avance de la bande de matière plastique à graver est comprise entre 0,5 et 10 m/min, de préférence entre 1 et 6 m/min, et de manière particulièrement préférée, entre 2 et 4 m/min.

3. Procédé selon l'une des revendications 1 ou 2, **caractérisé en ce que**
un faisceau laser ou plusieurs faisceaux laser est/sont générés par un ou plusieurs lasers,
et/ou
**en ce que** le faisceau laser ou les faisceaux laser sont scindés en d'autres faisceaux pouvant être utilisés séparément pour la structuration,
et/ou
**en ce que** le faisceau laser ou les faisceaux laser sont guidés par au moins une tête laser avec une lentille et/ou au moins un miroir pouvant osciller, en particulier une tête galvanométrique.

4. Procédé selon la revendication 3,
**caractérisé en ce que**
le dispositif de gravure laser et/ou la tête laser ou une ou plusieurs têtes laser et/ou un ou plusieurs miroir(s) pouvant de préférence osciller peuvent être déplacés parallèlement et/ou transversalement à la direction d'avance de la bande de matière plastique et/ou en ce l'on peut faire varier leur distance par rapport à la surface de la bande de matière plastique.

5. Procédé selon l'une des revendications précédentes,
**caractérisé en ce que**
grâce à l'adaptation de la température de la surface de la bande de matière plastique tournée vers le dispositif de gravure laser actif et/ou de la puissance laser, on détermine la géométrie des cavités,
et/ou
**en ce que** la géométrie des cavités est commandée par ajustage de la distance entre la tête laser et/ou le miroir pouvant de préférence osciller et la surface de la bande de matière plastique tournée vers celui-ci.

6. Procédé selon l'une des revendications précédentes,
**caractérisé en ce que**
la bande de matière plastique comprend au moins une ou plusieurs matière(s) plastique(s) thermoplastique(s) transparente(s), de préférence une matière plastique contenant un PMMA ou un polycarbonate,
et/ou
**en ce que** la bande de matière plastique comprend au moins une ou plusieurs matière(s) plastique(s) thermoplastique(s) transparente(s) qui comprend ou comprennent des particules de diffusion, de préférence du TiO2, BaSO4, des systèmes à base de polystyrène ou de polysilsesquioxane, et/ou
**en ce que** la bande de matière plastique présente une épaisseur dans la plage de 0,5 à 25 mm, de préférence de 1 à 20 mm, et de manière particulièrement préférée, de 2 à 10 mm.

7. Procédé selon l'une des revendications précédentes,
**caractérisé en ce que**
en guise de laser, on utilise un laser à CO2, à excimère ou un laser N2,
et/ou
**en ce que** la puissance laser par faisceau est réglée dans la plage comprise entre 2W et 400W, de préférence entre 5W et 150W.

8. Procédé selon l'une des revendications précédentes,
**caractérisé en ce que**,
sur les deux côtés de la bande en matière plastique, une gravure de surface a lieu.
